# EUROPEAN PATENT APPLICATION

(11) **EP 0 567 994 A1**
(43) Date of publication of application: **03.11.1993**
(21) Application number: 93106794.6
(22) Date of filing: 27.04.1993
(51) Int. Cl.: G01J 3/28

(54) **Spectral band variable type radiometer**

(30) Priority: 28.04.1992 JP 136204/92
(71) Applicant: NEC CORPORATION, Tokyo (JP)
(72) Inventor: Tanii, Jun, c/o Nec Corporation, Tokyo (JP)
(74) Representative: VOSSIUS & PARTNER

(57) **Abstract**

A spectral band variable type radiometer of the present invention has a prism (32) for dispersing an incident light to provide a plurality of spectrums, and two-dimensional photoelectric elements array (33) for detecting the spectrums, respectively, and a plurality of switches (34) connected to the photoelectric elements. The switches are controlled so that the radiometer can observes spectrums in a desired spectral band and width.

## Description

This invention relates to a spectral band variable type radiometer, and more particularly, to a spectral band variable type radiometer to be well adapted to a space craft.

A first conventional radiometer includes a telescope for converging incident light, a spectroscope for dividing the converged lights into two lights of different spectral bands, two trimming filters for trimming the two spectrums supplied from the spectroscope, respectively, and two solid-state image sensor arrays for detecting the spectrums passing through the trimming filters. Operation of the first conventional radiometer will be explained later in conjunction with the drawings.

According to the first conventional radiometer, however, there is a disadvantage in that the trimming filters have to be changed at each time when an observation range, that is a spectral band, is changed. As a result, the radiometer is not suitable for an observation in which a variety of spectral bands are continuously observed.

A second conventional radiometer employs a trimming filter wheel having a plurality of trimming filters having different transmission bands. In the radiometer, a plurality of the trimming filters can be changed by turning the filter wheel in accordance with a predetermined command signal.

According to the second conventional radiometer, however, there are disadvantages in that the trimming filters are difficult to be changed at high speed and with high reliability because the filters are changed mechanically by turning the filter wheel. Further, the number of the trimming filters is limited to be set on the filter wheel, a range of the observation, that is a spectral line width and a spectral band, is limited to be determined. Furthermore, a spectral band to be observed can not be changed continuously.

Accordingly, it is an object of the invention to provide a spectral band variable type radiometer in which a spectral band to be observed can be changed at high speed and with high reliability.

It is a further object of the invention to provide a spectral band variable type radiometer by which observation can be carried in a wide spectral line width.

It is a still further object of the invention to provide a spectral band variable type radiometer by which observation can be carried out continuously for any spectral band.

According to the invention, a spectral band variable type radiometer includes:
means for dispersing an incident light to provide a plurality of spectrums;
a two-dimensional photoelectric convertor composed of a plurality of photoelectric conversion elements arranged in matrix for detecting the plurality of spectrums, respectively;
a plurality of switches connected to the plurality of photoelectric conversion elements, respectively;
means for controlling the plurality of switches to be turned on and off in a desired spectral band; and
means for performing a predetermined observation in accordance with at least one output signal being obtained via the plurality of switches from the plurality of photoelectric conversion elements in each column.

The other objects and features of the invention will become understood from the following description with reference to the accompanying drawings.
Fig. 1 is a functional diagram showing a first conventional radiometer;
Fig. 2A is a functional diagram showing a second conventional radiometer;
Fig. 2B is a plan view showing a filter wheel shown in Fig. 2A;
Fig. 3 is a functional diagram showing a spectral band variable type radiometer of a first preferred embodiment according to the invention;
Fig. 4 is a schematic view showing a prism used in the first preferred embodiment shown in Fig. 3;
Fig. 5 is a schematic view showing a two-dimensional solid-state image sensor array used in the first preferred embodiment shown in Fig. 3;
Fig. 6 is a graph showing operation of the first preferred embodiment shown in Fig. 3;
Fig. 7 is a functional diagram showing a spectral band variable type radiometer of a second preferred embodiment according to the invention;
Fig. 8 is a schematic view showing a diffraction grating used in the second preferred embodiment shown in Fig. 7;
Fig. 9 is a schematic view showing a one-dimensional solid-state image sensor array used in the second preferred embodiment shown in Fig. 7; and
Fig. 10 is a functional diagram showing a spectral band variable type radiometer of a third preferred embodiment according to the invention.

### DESCRIPTION OF THE PREFERRED EMBODIMENTS

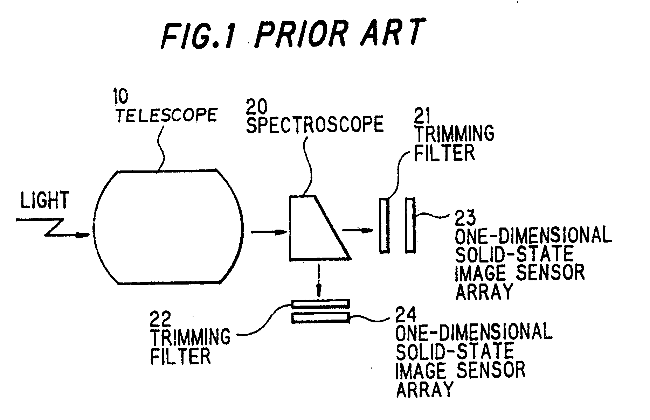

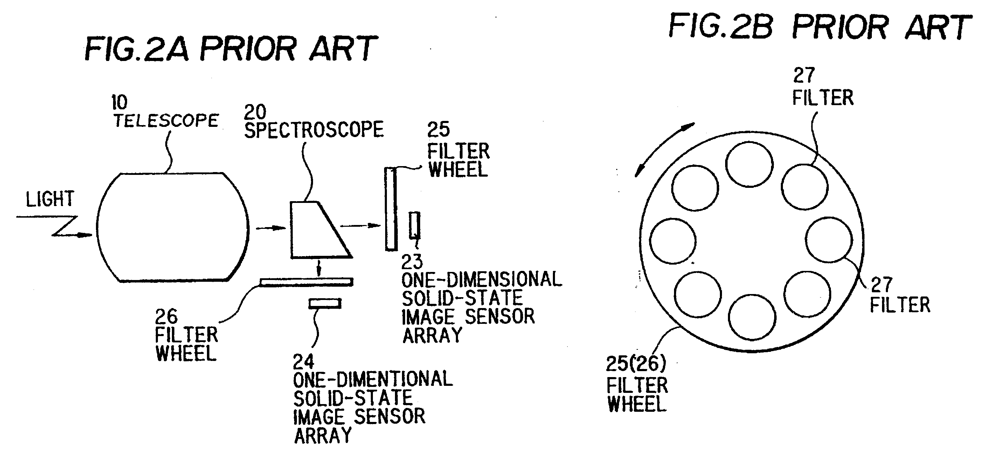

For better understanding of the background of the present invention, the basic principle of the conventional technology will be first described hereinafter with reference to Fig. 1 and Figs. 2A and 2B.

Fig. 1 is a first conventional radiometer which includes a telescope 10 to which an incident light is supplied, a spectroscope 20 such as a dichroic prism or a dichroic mirror, two trimming filters 21 and 22, and two one-dimensional solid-state image sensor arrays 23 and 24 positioned behind the trimming filters 21 and 22, respectively.

In the first conventional radiometer, when an incident light is supplied to the microscope 10, the incident light is converged thereat and is supplied to the spectroscope 20. The converged light is divided into two different spectrums by the spectroscope 20, and are supplied to the trimming filters 21 and 22, respectively. The two spectrums are trimmed by the trimming filters 21 and 22 to obtain two specific spectrums, respectively. The trimmed spectrums are detected by the one-dimensional solid-state image sensor arrays 23 and 24, respectively. After that, a predetermined observation, that is a radiometry, is carried out in accordance with output signals of the one-dimensional solid state image sensor arrays 23 and 24.

According to the first conventional radiometer, however, there is a disadvantage in that the trimming filters 21 and 22 have to be changed when a spectral band to be observed is changed. As a result, the radiometer is not suitable for an observation in which a variety of spectral bands are continuously observed.

Fig. 2A shows a second conventional radiometer which has been proposed to be used in a space craft. The radiometer includes a telescope 10 to which an incident light is supplied, a spectroscope 20, two trimming filter wheels 25 and 26, and two one-dimensional solid-state image sensor arrays 23 and 24 positioned behind the trimming filter wheels 25 and 26, respectively.

Each of the trimming filter wheels 25 and 26 has eight filters 27 as shown in Fig. 2B, and is turned to change a filter to be positioned at the front stage of the one-dimensional solid-state image sensor arrays 23 and 24 in accordance with a command signal transmitted from a ground station (not shown).

According to the second conventional radiometer, the plurality of trimming filters 27 can be changed by remote control from the ground station. However, there are disadvantages in that the trimming filters 27 are difficult to be changed at high speed and with high reliability because the filters 27 are charged mechanically by turning the filter wheels 25 and 26. Further, the number of the trimming filters 27 is limited, a range of the observation, that is a spectral band width and a spectral band, is limited to be used.

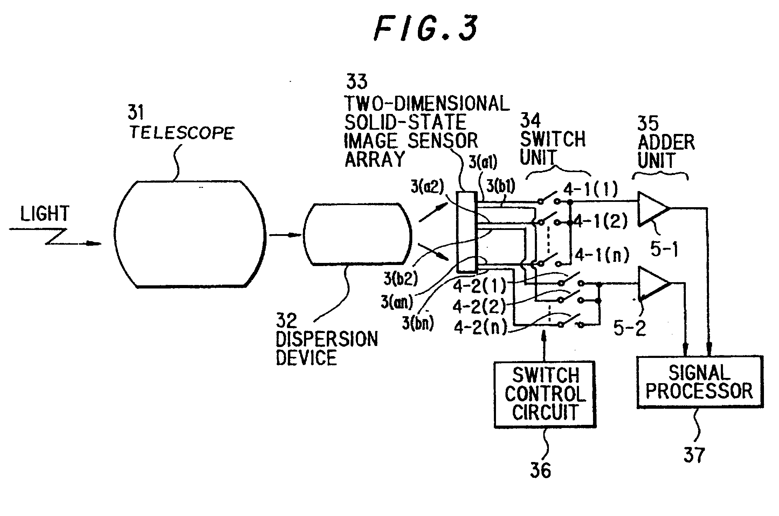

Fig. 3 shows a spectral band variable type radiometer of a first preferred embodiment according to the invention. The radiometer includes a telescope 31 to which an incident light is supplied, a dispersion device 32 positioned next to the telescope 31, a two-dimensional solid-state image sensor array 33 positioned next to the dispersion device 32, a switch unit 34 connected to the two-dimensional solid-state image sensor array 33, an adder unit 35 connected to the switch unit 34, a switch control circuit 36 connected to the switch unit 34, and a signal processor 37 connected to the adder unit 35.

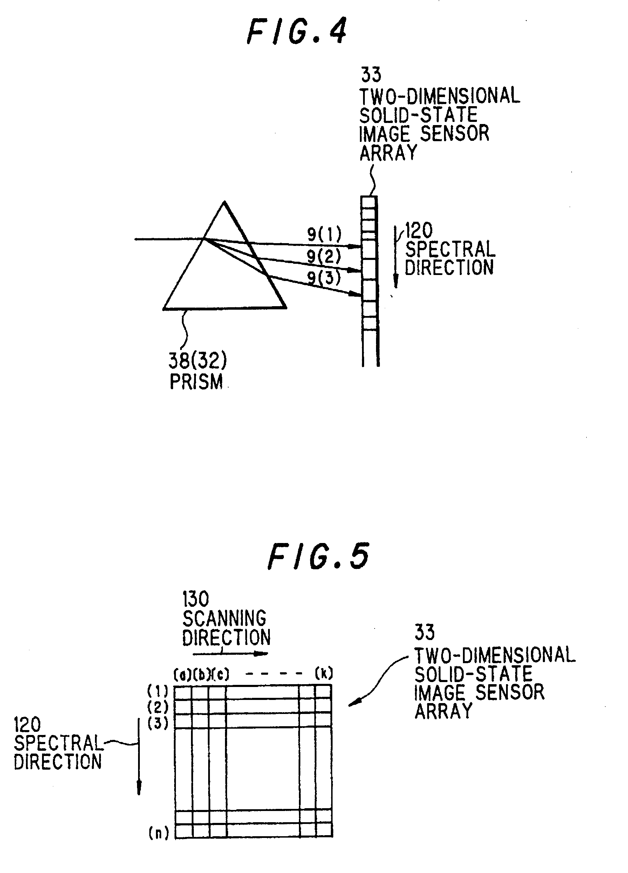

The dispersion device 32 is a prism 38 shown in Fig. 4. A diffraction grating of a transmission type or a reflection type may be used as the dispersion device 32 instead of the prism 38.

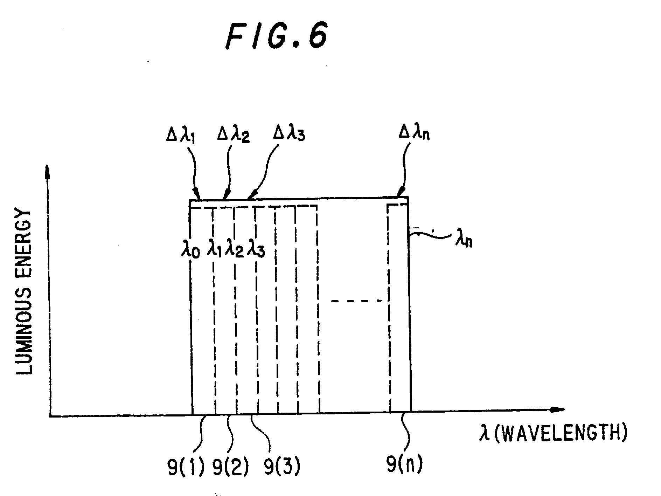

The two-dimensional solid-state image sensor array 33 is composed of a plurality of solid-state image sensors arranged to be matrix of "n × k" as shown in Fig. 6. The two-dimensional solid-state image sensor array 33 are positioned so that a spectral direction 120 and a scanning direction 130 correspond to the flight direction and the cross-track direction, respectively, if the radiometer is onboard a spacecraft.

The switch unit 34 is composed of a plurality of switches connected to the plurality of solid-state image sensors, correspondingly. The adder unit 35 is composed of "k" in number of adders 5-1 to 5-k each connected to a corresponding column of the switches arranged in the spectral direction 120. The switch unit 34 is controlled to be turned on and off in each column by the switch control circuit 36.

The switch control circuit 36 is controlled in accordance with a command signal transmitted from a ground station (not shown), if the radiometer is used in a spacecraft.

In operation, when an incident light is supplied to the telescope 31, the light is converged thereat and is supplied to the dispersion device 32. The converged light is dispersed by the dispersion device 32 (prism 38) to obtain a plurality of spectrums, and the spectrums are detected at the two-dimensional solid-state image sensor array 33 in each column. Next, output signals of the two-dimensional solid-state image sensor array 33 are supplied through the switches to the adders 5-l to 5-k, respectively, and they are added in each column thereby. Then, the added signals are supplied to the signal processor 37, respectively, and a predetermined observation, that is a radiometry, is carried out in accordance with the output signal of the adder unit 35 in the signal processor 37.

In such case, if the switches 4-1(1) to 4-1(3) of the first column of the switch unit 34 are turned on, the adder 5-1 supplies a combination signal generated by adding three spectrums 9(1) to 9(3) as shown in Fig. 4. The combination signal is equivalent to a spectrum having a spectral band of λ₀ to λ₃ and a spectral line width of Δλ₁ + Δλ₂+ Δλ₃ shown in Fig. 6. If only the switch 4-1(2) is turned on, an output signal having a spectral band of λ₁ and λ₂ and a spectral band width of Δλ₂ is obtained.

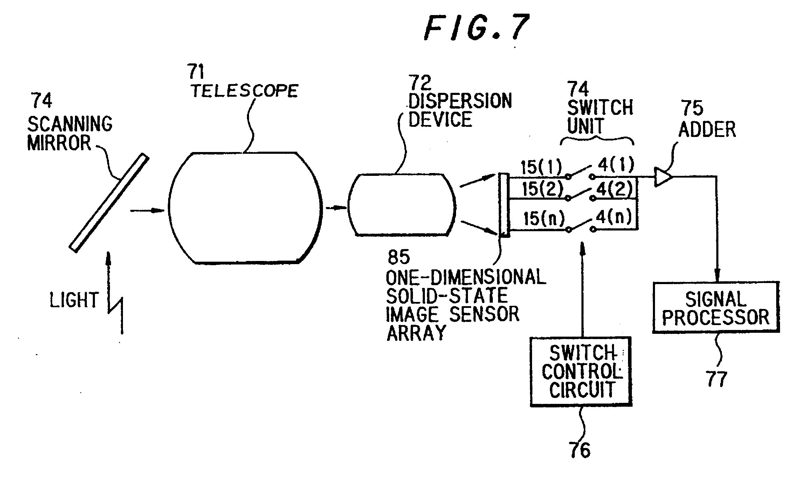

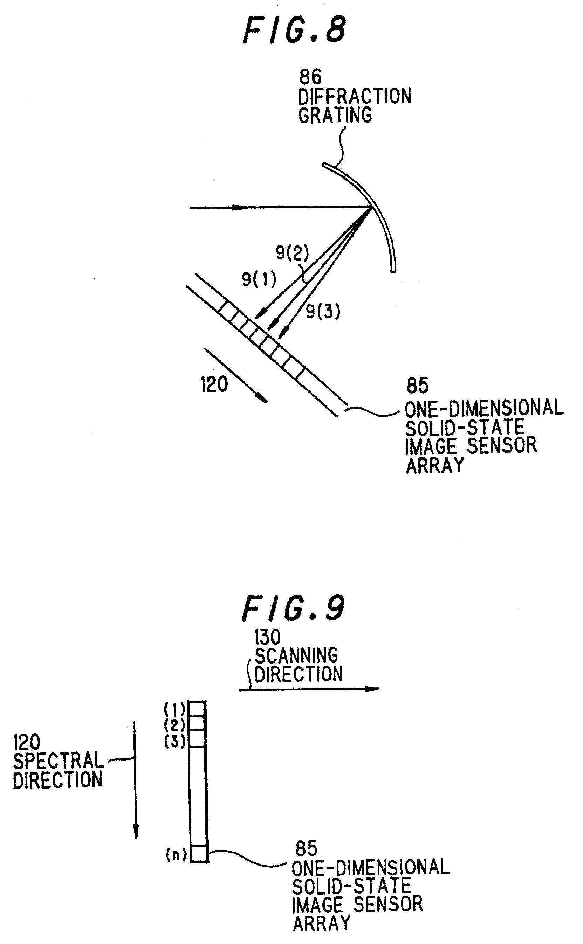

Fig. 7 shows a spectral band variable type radiometer of a second preferred embodiment according to the invention. The radiometer includes a scanning mirror 74 to which an incident light is supplied, a telescope 71, a dispersion device 72 of a curved surface type diffraction grating 86 shown in Fig. 8, a one-dimensional solid-state image sensor array 85, a switch unit composed of a plurality of switches 4(1) to 4(n), an adder 75 connected to the switch unit 74, a switch control circuit 76, and a signal processor 77 connected to the adder 75.

The scanning mirror 74 scans an incident light to be supplied to the telescope 71, so that a light can be received in any direction by adjusting the arrangement of the scanning mirror 74. Such a scanning mirror may be used in a first preferred embodiment shown in Fig. 3.

The one-dimensional solid-state image sensor array 85 is composed of "n" in number of solid-state image sensors (1) to (n) as shown in Fig. 9. The solid-state image sensors (l) to (n) are arranged in a spectral direction 120.

According to the second preferred embodiment, the one-dimensional solid-state image sensor array 85 scans an observation light in a scanning direction 130 which is orthogonal to the spectral direction 120, so that the radiometer may operate in the same manner as that of the first preferred embodiment shown in Fig. 3.

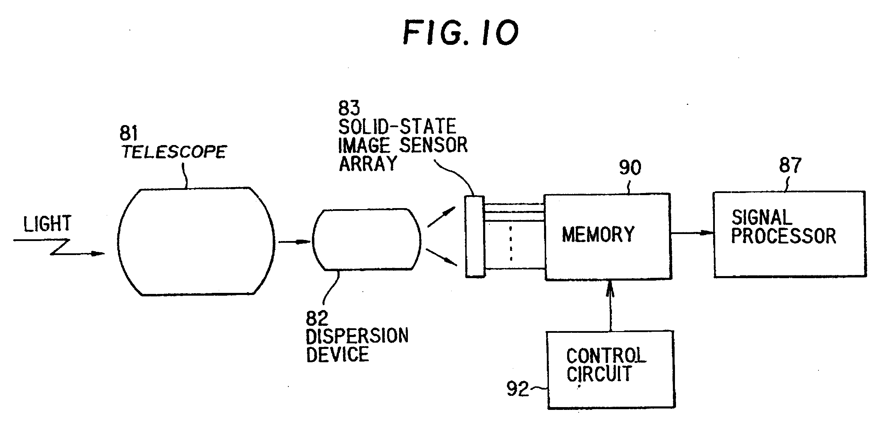

Fig. 10 shows a spectral band variable type radiometer of a third preferred embodiment according to the invention. The radiometer includes a telescope 81 for converging an incident light, a dispersion device 82 for dispersing a light supplied from the telescope 81, a solid-state image sensor array 83 for detecting the dispersed lights, a memory 90 for storing output signals of the solid-state image sensor array 83, a control circuit 92 for controlling the memory 90 to be read and written, and a signal processor 87 for processing an output signal of the memory 90 for a predetermined observation, that is a radiometry. The solid-state image sensor array 83 may be either one of one-dimensional type and two-dimensional type either.

In the third preferred embodiment, output signals of the solid-state image sensor array 83 are stored in the memory 90 under control of the control circuit 92. And, signals stored in the memory 90 are read out to the signal processor 87.

Although the invention has been described with respect to specific embodiment for complete and clear disclosure, the appended claims are not to be thus limited but are to be construed as embodying all modification and alternative constructions that may be occur to one skilled in the art which fairly fall within the basic teaching herein set forth.

## Claims

1. A spectral band variable type radiometer, comprising:
means for dispersing an incident light to provide a plurality of spectrums;
a two-dimensional photoelectric convertor composed of a plurality of photoelectric conversion elements arranged in matrix for detecting said plurality of spectrums, respectively;
a plurality of switches connected to said plurality of photoelectric conversion elements, respectively;
means for controlling said plurality of switches to be turned on and off in a desired spectral band; and
means for performing a predetermined observation in accordance with at least one output signal being obtained via said plurality of switches from said plurality of photoelectric conversion elements in each column.

2. A spectral band variable type radiometer, according to claim 1, wherein:
said observation performing means comprises a plurality of adders for adding outputs of said plurality of photoelectric conversion elements in each column.

3. A spectral band variable type radiometer, according to claim 1 or 2, further comprising
a scanning mirror for scanning said incident light to be supplied to said dispersing means to obtain an observation light in any desired direction.

4. A spectral band variable type radiometer, according to any of claims 1 to 3, wherein:
said dispersing means is a prism.

5. A spectral band variable type radiometer, according to any of claims 1 to 3, wherein:
said dispersing means is a diffraction grating.

6. A spectral band variable type radiometer, comprising:
means for dispersing an incident light to provide a plurality of spectrums;
a two-dimensional photoelectric convertor composed of a plurality of photoelectric conversion elements arranged in matrix for detecting said plurality of spectrums, respectively;
means for storing an output of said two-dimensional photoelectric convertor; and
means for performing a predetermined observation in accordance with at least one output read from said storing means;

7. A spectral band variable type radiometer, comprising:
means for dispersing an incident light to provide a plurality of spectrums;
a one-dimensional photoelectric convertor composed of a plurality of photoelectric conversion elements for detecting said plurality of spectrums, respectively;
means for performing a predetermined observation in accordance with at least one output signal of said photoelectric conversion elements;
a plurality of switches connected to said plurality of photoelectric conversion elements, respectively, for switching them one for one; and
means for controlling said plurality of switches in each column to obtain a signal in a desired spectral band.

8. A spectral band variable type radiometer, according to claim 7, wherein:
said observation performing means comprises a plurality of adders for adding outputs of said one-dimensional photoelectric convertor.

9. A spectral band variable type radiometer, according to claim 7 or 8, further comprising:
a scanning mirror for scanning said input light to be supplied to said dispersing means to obtain a light in any desired direction.

10. A spectral band variable type radiometer, according to any of claims 7 to 9, wherein:
said dispersing means is a prism.

11. A spectral band variable type radiometer, according to any of claims 7 to 9, wherein:
said dispersing means is a diffraction grating.

12. A spectral band variable type radiometer, comprising:
means for dispersing an incident light to provide a plurality of spectrums;
a one-dimensional photoelectric convertor composed of a plurality of photoelectric conversion elements for detecting said plurality of spectrums, respectively;
means for storing an output of said one-dimensional photoelectric convertor;
means for performing a predetermined observation in accordance with at least one output signal of said photoelectric conversion elements;
means for controlling said storing means to obtain a signal in a desired spectral band.
